# EUROPEAN PATENT APPLICATION

(11) **EP 3 758 277 A1**
(43) Date of publication of application: **30.12.2020**
(21) Application number: 19757285.2
(22) Date of filing: 20.02.2019
(51) Int. Cl.: H04L 9/08, H04L 9/32, H04L 29/12

(54) **METHOD AND SYSTEM FOR ENCRYPTED COMMUNICATION BETWEEN DEVICES BY USING BLOCK CHAIN SYSTEM**

(30) Priority: 23.02.2018 KR 20180021606
(71) Applicant: HDAC Technology AG, 6300 Zug (CH)
(72) Inventor: LEE, Jae Min, Seoul 05813 (KR); KIM, Byung Chul, Seoul 04180 (KR)
(74) Representative: Goddar, Heinz J.
(86) International application number: PCT/KR2019/002065
(87) International publication number: WO 2019/164260

(57) **Abstract**

The present invention relates to a method and system for encrypted communication between devices belonging to a group having been authenticated on the basis of stability provided by a block chain system. According to the present invention, P2P encrypted communication, encrypted communication between 1 and N, or encrypted communication N and N is possible on a block chain system, in which all contents are disclosed, whereas an existing block chain enables only fully disclosed information to be shared.

## Description

### TECHNICAL FIELD

The present invention relates to a method and system for encrypted communication between devices, and more particularly, to a method and system for encrypted communication between devices belonging to a group having been authenticated on the basis of stability provided by a block chain system.

### BACKGROUND ART

Block chain can be said to be a database structure in the form of a P2P distributed ledger. A block is formed by collecting transaction information (data) having a certain size, and these blocks are sequentially connected in a chain over time. Block chain formation requires verification and approval of transaction details of network participants, and each block precisely refers to the existence of the previous block, so it is virtually impossible to change a block order or manipulate the information in the block. This plays a crucial role in eliminating inefficiency caused by not trusting each other in a business relationship.

The nature of changes that block chain will bring can be summarized as 'the authority to approve transactions and democratization of information'. This enables transparent and safe direct transactions without the involvement of strong third-party accredited agencies or intermediaries. Almost real-time approval is possible because autonomous authority delegation by a secure system is possible, and information is disclosed, stored, and managed to all network participants. Therefore, in order to manipulate specific transaction information, an impractical task that requires hacking the computers of all participants and manipulating the entire block chain, is necessary. As such, a block chain-based transaction system has the effect of enhancing user convenience such as speed, safety, transparency, and cost reduction.

However, an existing block chain system consists of an open network. Therefore, since all devices connected to the block chain system can access information on the block chain, it is difficult to make transactions with guaranteed confidentiality between specific devices. In contrast, in the case of using Secure Socket Layer (SSL) rather than an existing block chain network, it is difficult to achieve integrity guarantee for transactions.

### DESCRIPTION OF EMBODIMENTS

### TECHNICAL PROBLEM

The present invention provides a method and system for encrypted communication between devices by using a block chain system that enables encrypted communication only between mutually authenticated devices among devices on the block chain system.

### SOLUTION TO PROBLEM

According to an aspect of the present invention, there is provided a method for encrypted communication between devices by using a block chain system that is a communication method between devices connected to the block chain system, the method including: (a) generating a group generation transaction for generating a group (G) by using a pool node of the block chain system; (b) generating an address/authority designation transaction for designating addresses and authorities of devices belonging to the group (G) with regard to the group (G) by using the pool node; (c) generating public keys with private keys and generating a public key storage transaction for storing the generated public keys with regard to the group (G) by using the devices (A, B) belonging to the group (G); (d) generating a transmission transaction in which information to be transmitted to a public key of the device B obtained by referring to the public key storage transaction is encrypted, and transmitting the generated transmission transaction to the device (B) by using the device (A); and (e) verifying an authority assigned to the device (A) by referring to the address/authority designation transaction and decrypting a data area of the transmission transaction with a private key of the device (B) when authenticated, by using the device (B) that receives the transmission transaction.

The group generation transaction and the address/authority designation transaction may be signed with a private key of the pool node.

Authorities designated in the address/authority designation transaction may include an authority for accessing the group (G) and an authority for writing.

According to another aspect of the present invention, there is provided a system for encrypted communication between devices by using a block chain system, the system including: a block chain pool node; and devices (A, B) connected to the block chain pool node, wherein the block chain pool node includes: a group generation unit generating a group generation transaction for generating a group (G); an address/authority designation unit generating an address/authority designation transaction for designating addresses (A, B) and authorities of devices belonging to the group (G) with regard to the group (G); a public key storage unit generating public keys with private keys and generating a public key storage transaction for storing the generated public keys with regard to the group (G) by using the devices (A, B); a transmission unit generating a transmission transaction in which information to be transmitted to a public key of the device (B) obtained by referring to the public key storage transaction is encrypted, and transmitting the generated transmission transaction to the device (B) by using the device (A); and a reception unit receiving the transmission transaction, verifying an authority assigned to the device (A) by referring to the address/authority designation transaction and decrypting a data area of the transmission transaction with a private key of the device (B) when authenticated, by using the device (B).

The group generation transaction and the address/authority designation transaction may be signed with a private key of the pool node.

Authorities designated in the address/authority designation transaction may include an authority for accessing the group (G) and an authority for writing.

According to another aspect of the present invention, there is provided a computer-readable recording medium having a program for executing the method for encrypted communication between devices by using a block chain system in a computer recorded thereon.

### ADVANTAGEOUS EFFECTS OF DISCLOSURE

According to the present invention, P2P encrypted communication, encrypted communication between 1 and N, or encrypted communication N and N can be performed on a block chain system, in which all contents are disclosed, whereas an existing block chain enables only fully disclosed information to be shared. In addition, encrypted communication only between addresses belonging to a specific group can be performed.

For example, many security problems (such as controlling inner devices by hacking) occur in a smart home, but it can be assumed that a block chain group according to the present invention is made into unit 101, block 11, specific apartments. In this case, family members belonging to this group, wallets, and smart devices may be registered as components of the group. Then, members of this group can stably control devices through block chain-based authentication with superior security stability, and next-door neighbors or others cannot control devices in unit 101, block 11 until they are registered in this group on the block chain.

### BRIEF DESCRIPTION OF DRAWINGS

FIG. 1 is a diagram for explaining a process of generating a group generation transaction and an address/authority designation transaction in a system for encrypted communication between devices by using a block chain system according to the present invention.
FIG. 2 is a diagram for explaining a process of generating a public key storage transaction in a system for encrypted communication between devices by using a block chain system according to the present invention.
FIG. 3 is a diagram for explaining a process of generating a transmission transaction in a system for encrypted communication between devices by using a block chain system according to the present invention.

### MODE OF DISCLOSURE

Hereinafter, exemplary embodiments of the present invention will be described in detail with reference to the attached drawings.

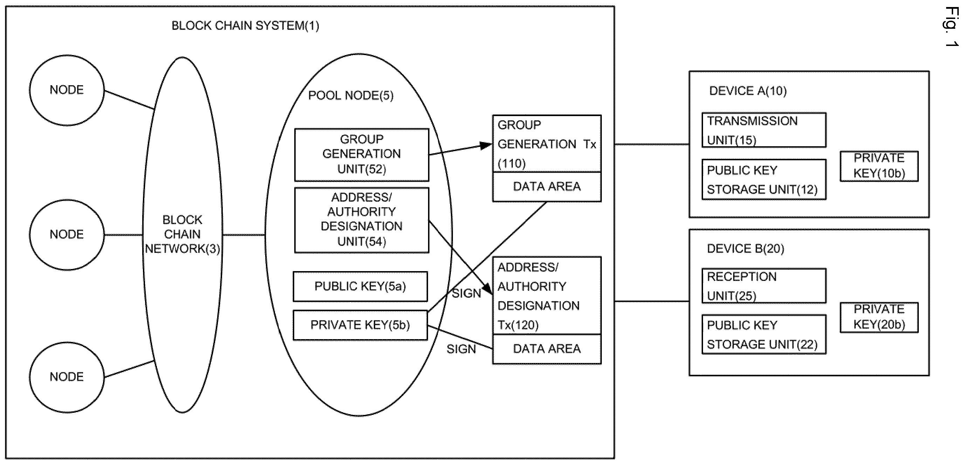

Referring to FIGS. 1 through 3, a system for encrypted communication between devices by using a block chain system according to exemplary embodiments of the present invention includes a pool node 5 of a block chain system 1, and devices A(10) and B(20) connected thereto.

A block chain is a digital ledger in which information of transactions occurring in a public or private P2P network is shared among network participants, and a ledger distributed across all member nodes (block chain nodes) of the network is stored permanently in a block unit as a result of asset exchange between network peers. Blocks of all transactions agreed and validated by network participants are connected to the most recent block from the beginning (genesis block) of a chain and are called a block chain. The block chain serves as a single access path for completely intact original data, and members of a block chain network 3 can only see transactions related to them.

Thus, the block chain nodes according to the present invention form members of the block chain network 3 on a P2P network, and the block chain system 1 consists of a set of block chain nodes.

A wallet is generated on the block chain nodes, and a first address is generated herein. In the block chain nodes, an address becomes a key to store or view information or to exchange transactions. Therefor, all information exchange on the block chain nodes is basically performed through addresses. Each block chain node may have one or more addresses, and a plurality of transactions stored by time may be recorded on one address. A transaction identifier (ID) is a unique hash value that is given for each transaction, and when you know the transaction ID, you can immediately search for corresponding information from the entire block chain information.

In this way, the block chain nodes are a set of functions such as routing, a block chain database, mining, a wallet service, and the like, and the pool node 5 among them has all of these functions, has the most up-to-date block chain copy and thus is a node in which transaction verification is possible without external reference.

Meanwhile, the device A(10) and the device B(20) are devices connected to the block chain pool node 5 via a network (not shown), and specific targets thereof are not limited.

The pool node 5 according to the present invention includes a group generation unit 52 and an address/authority designation unit 54, and the group generation unit 52 generates a transaction (a group generation transaction 110) for generating a group G, and the address/authority designation unit 54 generates a transaction (an address/authority designation transaction 120) for designating addresses A and B and authorities of the devices belonging to the specific group G.

A detailed description of the group generation transaction 110 and the address/authority designation transaction 120 will be provided later.

In addition, the device A(10) according to the present invention includes a public key storage unit 12 and a transmission unit 15, and the device B(20) includes a public key storage unit 22 and a reception unit 25.

The public key storage units 12 and 22 generate public keys according to a public key encryption method and generate a transaction (a public key storage transaction 130) for storing the generated public keys.

The transmission unit 15 generates a transmission transaction 140 in which information to be transmitted to a public key 20a of the device B(20) obtained by referring to the public key storage transaction 130 is encrypted, and transmits the generated transmission transaction 140 to the device B(20).

The reception unit 25 receives the transmission transaction 140, verifies an authority assigned to the device A(10) by referring to the address/authority designation transaction 120, and decrypts a data area of the transmission transaction 140 with a private key 20b of the device B(20) when authenticated.

A detailed description of the public key storage transaction 130 and the transmission transaction 140 will be provided later.

Hereinafter, a process of generating the group generation transaction 110 and the address/authority designation transaction 120 according to the preset invention will be described in detail with reference to FIG. 1.

The pool node 5 that is a first server of the block chain system 1, the device A(10) having the address A, and the device B(20) having the address B are prepared. Here, the addresses A and B are IDs for the device A(10) and the device B(20), respectively. Also, a public key 5a of the pool node 5 is disclosed on the block chain system 1.

First, the pool node 5 generates the group generation transaction 110 for generating one group G. Information related to the group G (for example, whether the group is for public use or private use that can only be viewed by a specific user may be included) is stored in a data area of the group generation transaction 110 and is signed with a private key 5b of the pool node 5. The information in the data area of the group generation transaction 110 is efficiently stored only when signed with the private key 5b of the pool node 5, and is spread to other nodes.

Thus, all nodes on the block chain system 1 may access the data area of the group generation transaction 110 by using the public key 5a of the pool node 5 attached to the group generation transaction 110, and it can be seen that the group G has been generated.

Subsequently, the pool node 5 generates a transaction (address/authority designation transaction 120) for designating addresses A and B and authorities of devices belonging to the group G. At this time, the address/authority designation transaction 120 includes IDs of the group G, so that it is possible to know which group the transaction belongs to.

Contents in which the device A(10) and the device B(20) belong to the group G, are signed with the private key 5b of the pool node 5 and are stored in a data area of the address/authority designation transaction 120.

In addition, an authority for accessing the group G and an authority for writing are signed with the private key 5b of the pool node 5 and are stored in the data area of the address/authority designation transaction 120.

Thus, all nodes on the block chain system 1 may access the data area of the address/authority designation transaction 120 by using the public key 5a of the pool node 5 attached to the address/authority designation transaction 120, and it can be known that the device A(10) and the device B(20) belong to the same group G.

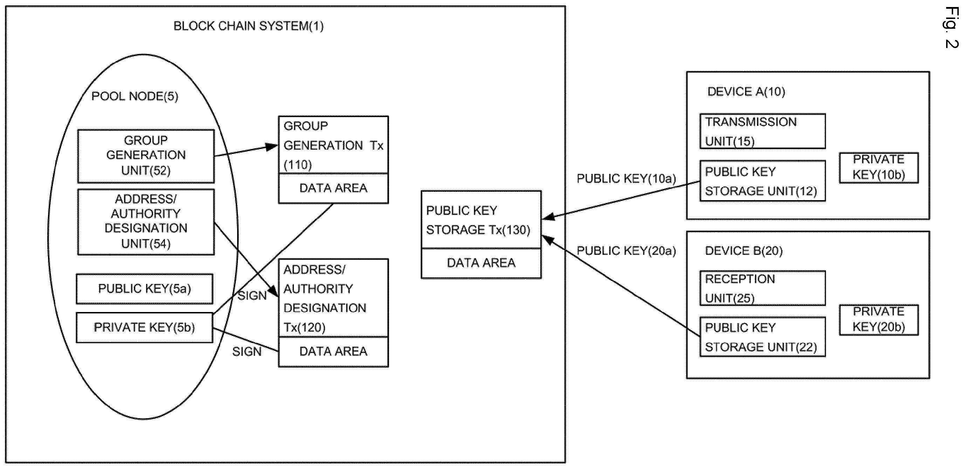

Referring to FIG. 2, the device A(10) and the device B(20) generate public keys 10a and 20a by using private keys 10b and 20b, respectively, and generate a public key storage transaction 130 for storing the generated public keys 10a and 20a. At this time, the public key storage transaction 130 includes IDs of the group G, so that it is possible to know which group the transaction belongs to.

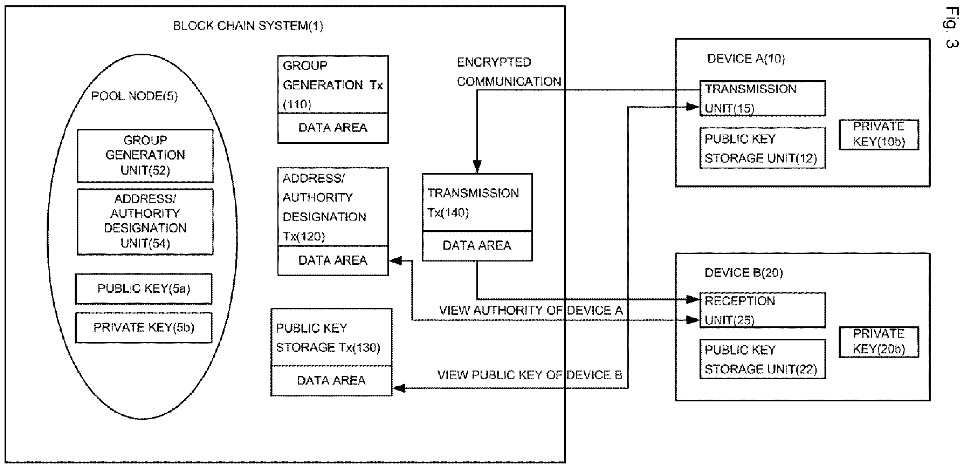

Hereinafter, a process in which encrypted communication between devices is performed through the process of generating the transmission transaction 140 according to the present invention, will be described in detail with reference to FIG. 3.

When the device A(10) delivers encrypted information to the device B(20) belonging to the same group G, the device A(10) generates a transmission transaction 140 in which information to be transmitted to the public key 20a of the device B(20) obtained by referring to the public key storage transaction 130 is encrypted, and transmits the generated transmission transaction 140 to the device B(20).

Then, the device B(20) receives the transmission transaction 140 and authenticates whether a sender is capable of sending it to a receiver. Sender authentication may be confirmed by verifying whether an authority to write the authority assigned to the device A(10) is registered in the data rea of the address/authority designation transaction 120. When the device B(20) is authenticated, the data area of the transmission transaction 140 is decrypted with the private key 20b of the device B(20), otherwise the transmitted contents are ignored.

Subsequently, the decrypted information is sequentially processed according to a general processing procedure.

Meanwhile, the above-described embodiments of the present invention can be recorded on a medium used in a general-purpose computer including a personal computer (PC). Example of the medium include a recording medium such as a magnetic recording medium (for example, read-only memory (ROM), floppy disks, hard disks, etc.), an optical reading medium (for example, CD-ROMs, DVDs, etc.), and an electrical recording medium (for example, flash memory, memory sticks, etc.).

While this invention has been particularly shown and described with reference to preferred embodiments thereof, it will be understood by those skilled in the art that various changes in form and details may be made therein without departing from the spirit and scope of the invention as defined by the appended claims. The preferred embodiments should be considered in descriptive sense only and not for purposes of limitation. Therefore, the scope of the invention is defined not by the detailed description of the invention but by the appended claims, and all differences within the scope will be construed as being included in the present invention.

## Claims

1. A method for encrypted communication between devices by using a block chain system that is a communication method between devices connected to the block chain system, the method comprising:
(a) generating a group generation transaction for generating a group (G) by using a pool node of the block chain system;
(b) generating an address/authority designation transaction for designating addresses and authorities of devices belonging to the group (G) with regard to the group (G) by using the pool node;
(c) generating public keys with private keys and generating a public key storage transaction for storing the generated public keys with regard to the group (G) by using the devices (A, B) belonging to the group (G);
(d) generating a transmission transaction in which information to be transmitted to a public key of the device B obtained by referring to the public key storage transaction is encrypted, and transmitting the generated transmission transaction to the device (B) by using the device (A); and
(e) verifying an authority assigned to the device (A) by referring to the address/authority designation transaction and decrypting a data area of the transmission transaction with a private key of the device (B) when authenticated, by using the device (B) that receives the transmission transaction.

2. The method of claim 1, wherein the group generation transaction and the address/authority designation transaction are signed with a private key of the pool node.

3. The method of claim 1, wherein authorities designated in the address/authority designation transaction include an authority for accessing the group (G) and an authority for writing.

4. A system for encrypted communication between devices by using a block chain system, the system comprising:
a block chain pool node; and
devices (A, B) connected to the block chain pool node,
wherein the block chain pool node comprises:
a group generation unit generating a group generation transaction for generating a group (G);
an address/authority designation unit generating an address/authority designation transaction for designating addresses (A, B) and authorities of devices belonging to the group (G) with regard to the group (G);
a public key storage unit generating public keys with private keys and generating a public key storage transaction for storing the generated public keys with regard to the group (G) by using the devices (A, B);
a transmission unit generating a transmission transaction in which information to be transmitted to a public key of the device (B) obtained by referring to the public key storage transaction is encrypted, and transmitting the generated transmission transaction to the device (B) by using the device (A); and
a reception unit receiving the transmission transaction, verifying an authority assigned to the device (A) by referring to the address/authority designation transaction and decrypting a data area of the transmission transaction with a private key of the device (B) when authenticated, by using the device (B).

5. The system of claim 4, wherein the group generation transaction and the address/authority designation transaction are signed with a private key of the pool node.

6. The system of claim 4, wherein authorities designated in the address/authority designation transaction include an authority for accessing the group (G) and an authority for writing.

7. A computer-readable recording medium having a program for executing the method for encrypted communication between devices by using a block chain system of one of claims 1 through 3 in a computer recorded thereon.
